(19) Europäisches Patentamt
European Patent Office
Office européen des brevets

(11) **EP 3 091 096 B1**

(12) **EUROPEAN PATENT SPECIFICATION**

(45) Date of publication and mention
of the grant of the patent:
**12.09.2018 Bulletin 2018/37**

(51) Int Cl.:
***C22C 19/05*** *(2006.01)*

(21) Application number: **16167785.1**

(22) Date of filing: **29.04.2016**

(54) **ARTICLE AND METHOD FOR FORMING AN ARTICLE**

ARTIKEL UND VERFAHREN ZUR BILDUNG EINES ARTIKELS

ARTICLE ET PROCÉDÉ DE FORMATION D'UN ARTICLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.05.2015 US 201514706151**

(43) Date of publication of application:
**09.11.2016 Bulletin 2016/45**

(73) Proprietor: **General Electric Company
Schenectady, NY 12345 (US)**

(72) Inventors:
• **CUI, Yan
Greenville, SC South Carolina 29615 (US)**
• **FENG, Ganjiang
Greenville, SC South Carolina 29615 (US)**
• **KOTTILINGAM, Srikanth Chandrudu
Greenville, SC South Carolina 29615 (US)**
• **LAYLOCK, Matthew
Greenville, SC South Carolina 29615 (US)**
• **TOLLISON, Brian Lee
Greenville, SC South Carolina 29615 (US)**

(74) Representative: **Foster, Christopher Michael et al
General Electric Technology GmbH
GE Corporate Intellectual Property
Brown Boveri Strasse 7
5400 Baden (CH)**

(56) References cited:
**WO-A1-2014/124626      US-A- 5 480 283
US-A- 5 882 586      US-B1- 6 416 596**

## Description

### FIELD OF THE INVENTION

The present invention is directed to a nickel-based superalloy, an article formed of a nickel-based superalloy and a method for forming an article.

### BACKGROUND OF THE INVENTION

Hot gas path components of gas turbines and engines, particularly turbine blades, vanes, nozzles, seals and stationary shrouds, operate at elevated temperatures, often in excess of 2,000 °F. Typically, superalloys, such as nickel-based superalloys, are utilized in the hot gas path in order to withstand the elevated temperatures. However, many currently utilized nickel-based superalloys have the drawback of being difficult to weld. For example, alloys such as GTD-111, INCONEL® 738 and Rene 108 are alloys that are difficult to weld. "GTD-111" is a registered trademark of General Electric Company. "INCONEL" is a registered trademark of alloys produced by Huntington Alloys Corporation, Huntington, West Virginia.

In addition, known alloys that are easier to weld have an increased amount of aluminum. A drawback to an increased amount of Al in known compositions is that the superalloys undesirably have a greater susceptibility to strain age cracking.

One class of alloy utilized commercially in the hot gas path is disclosed and claimed in U.S. Pat. No. 6,416,596, issued July 9, 2002 to John H. Wood et al.; which was an improvement to the class of alloys disclosed and claimed in U.S. Pat. No. 3,615,376, issued October 26, 1971 to Earl W. Ross. A known superalloy composition within the above class of alloys is GTD-111. GTD-111 has a nominal composition, in weight percent of the alloy, of 14% chromium, 9.5% cobalt, 3.8% tungsten, 1.5% molybdenum, 4.9% titanium, 3.0% aluminum, 0.1% carbon, 0.01% boron, 2.8% tantalum, and the balance nickel and incidental impurities. GTD-111 contains substantial concentrations of titanium (Ti) and tantalum (Ta). In certain conditions, Eta phase may form on the mold surfaces and in the interior of the casting, which, in some cases results in the formation of cracks. An attribute of the alloys disclosed and claimed in U.S. Pat. No. 6,416,596, including GTD-111, is the presence of "Eta" phase, a hexagonal close-packed form of the intermetallic $Ni_3Ti$, as well as segregated titanium metal in the solidified alloy. During alloy solidification, titanium has a strong tendency to be rejected from the liquid side of the solid/liquid interface, resulting in the segregation (local enrichment) of titanium in the solidification front and promoting the formation of Eta in the last solidified liquid. The segregation of titanium also reduces the solidus temperature, increasing the fraction of gamma/gamma prime ($\gamma/\gamma'$) eutectic phases and resulting micro-shrinkages in the solidified alloy. The Eta phase, in particular, may cause certain articles cast from those alloys to be rejected during the initial casting process, as well as post-casting, machining and repair processes. In addition, the presence of Eta phase may result in degradation of the alloy's mechanical properties during service exposure.

In addition to the formation of Eta, the class of alloys claimed in U.S. Pat. No. 6,416,596 is susceptible to the formation of detrimental topologically close-packed (TCP) phases (e.g., $\mu$ and $\sigma$ phases). TCP phases form after exposure at temperatures above about 1500 °F. TCP phases are not only brittle, but their formation reduces solution strengthening potential of the alloy by removing solute elements from the desired alloy phases and concentrating them in the brittle phases so that intended strength and life goals are not met. The formation of TCP phases beyond small nominal amounts results from the composition and thermal history of the alloy.

Articles and methods having improvements in the process and/or the properties of the components formed would be desirable in the art.

### BRIEF DESCRIPTION OF THE INVENTION

In one embodiment, an article comprising a composition, wherein the composition comprises, by weight percent, 20.0% to 22.0% chromium (Cr), 18.0% to 20.0% cobalt (Co), 1.0% to 2.0% tungsten (W), 3.0% to 6.0% niobium (Nb), 0.5% to 1.5% titanium (Ti), 2.0% to 3.0% aluminum (Al), 0.5% to 1.5% molybdenum (Mo), 0.03% to 0.18% carbon (C), up to 0.15% tantalum (Ta), up to 0.20% hafnium (Hf), up to 0.20% iron (Fe), balance nickel (Ni) and incidental impurities. The amount of Al is present according to the following formula:

$$Al \leq -(0.5 * Ti) + 3.75$$

The composition is weldable, has a microstructure comprising between about 35 vol% and 45 vol% gamma prime ($\gamma'$) and is substantially devoid of Eta and lower content of TCP phases at elevated working temperatures.

In another embodiment, a method for forming an article, the method including forming the composition into the article, the composition comprising, by weight percent, 20.0% to about 22.0% chromium (Cr), 18.0% to 20.0% cobalt (Co), 1.0% to 2.0% tungsten (W), 3.0% to 6.0% niobium (Nb), 0.5% to 1.5% titanium (Ti), 2.0% to 3.0% aluminum (Al), 0.5% to 1.5% molybdenum (Mo), 0.03% to 0.18% carbon (C), up to 0.15% tantalum (Ta), up to 0.20% hafnium (Hf), up to 0.20% iron (Fe), balance nickel (Ni) and incidental impurities. The amount of Al is present according to the following formula:

$$Al \leq -(0.5 * Ti) + 3.75$$

The article is heat treated to form a heat-treated microstructure. The heat-treated microstructure is weldable, has between 35 vol% and 45 vol% gamma prime ($\gamma$') and is substantially devoid of Eta and reduced content of TCP phases at elevated working temperatures.

In another embodiment, a method of operating a gas turbine, the method including providing an article comprising a composition comprising, by weight percent, 20.0% to 22.0% chromium (Cr), 18.0% to 20.0% cobalt (Co), 1.0% to 2.0% tungsten (W), 3.0% to t 6.0% niobium (Nb), 0.5% to 1.5% titanium (Ti), 2.0% to 3.0% aluminum (Al), 0.5% to 1.5% molybdenum (Mo), 0.03% to 0.18% carbon (C), up to 0.15% tantalum (Ta), up to 0.20% hafnium (Hf), up to 0.20% iron (Fe),balance nickel (Ni) and incidental impurities. The amount of Al is present according to the following formula:

$$Al \leq - (0.5 * Ti) + 3.75$$

The composition is weldable, has a microstructure comprising between 35 vol% and 45 vol% gamma prime ($\gamma$') and is substantially devoid of Eta and reduced content of TCP phases at elevated working temperatures. The article is exposed to a hot gas path stream at a temperature of at least 816 °C (1500 °F). The article has a low creep rate at greater than 2000 hours during the exposing.

Other features and advantages of the present invention will be apparent from the following more detailed description, taken in conjunction with the accompanying drawings which illustrate, by way of example, the principles of the invention.

DETAILED DESCRIPTION OF THE INVENTION

Provided are an article and a method for forming an article. Embodiments of the present disclosure, in comparison to methods and articles not using one or more of the features disclosed herein, are increased weldability, increased resistance to strain age cracking, increased creep lifetime, lengthened low cycle fatigue, and increased oxidation resistance. Embodiments of the present disclosure enable the fabrication of hot gas path components of gas turbines and gas turbine engines, superalloy compositions having at least as advantageous properties at elevated temperatures as known superalloys and being free of Eta phase and reduced content of TCP phases at elevated working temperatures.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

In one embodiment, an article includes a composition comprising, by weight percent, of 20.0% to 22.0% chromium (Cr), 18.0% to 20.0% cobalt (Co), 1.0% to 2.0% tungsten (W), 3.0% to 6.0% niobium (Nb), 0.5% to 1.5% titanium (Ti), 2.0% to 3.0% aluminum (Al), 0.5% to 1.5% molybdenum (Mo), 0.03% to 0.18% carbon (C), up to 0.15% tantalum (Ta), up to 0.20% hafnium (Hf), up to 0.20% iron (Fe),balance nickel (Ni) and incidental impurities.

In a further embodiment, the composition includes, by weight of 21.0% chromium (Cr), 19.0% cobalt (Co), 1.5 % tungsten (W), 4.7% niobium (Nb), 1.0% titanium (Ti), 2.6% aluminum (Al), 1.0% molybdenum (Mo), 0.14% carbon (C), and balance nickel (Ni) and incidental impurities.

In one embodiment of the present invention, the amount of aluminum (Al) that is present in the composition is provided according to the following formula:

$$Al \leq - (0.5 * Ti) + 3.75$$

wherein "Al" is the amount of aluminum in weight percent of the total composition and "Ti" is the amount of titanium in weight percent of the total composition.

The composition is weldable, has a microstructure comprising between 35 vol% and 45 vol% or between 37 vol% and 40 vol% or 38 vol% gamma prime ($\gamma$') and is substantially devoid of Eta and reduced content of TCP phases at elevated working temperatures.

Articles formed of the composition, according to the present disclosure, achieve mechanical properties in the superalloy that equal or exceed those of conventional superalloys, such as GTD-111, while minimizing or, ideally, completely avoiding the formation of microstructural instabilities such as Eta phase and reduced content of TCP phases at elevated working temperatures, for example, as compared to GTD-111.

For example, the nickel-base superalloy article formed according to the present invention has an improved combination of good weldability, oxidation resistance, lengthened low-cycle fatigue lifetime, lengthened increased creep lifetime all with respect to GTD-111 and minimizes or eliminates detrimental formation of Eta phase and the detrimental formation of topologically close-packed phases in the superalloy microstructure at elevated temperatures. The nickel-based superalloy article is characterized by an improved combination of creep life and microstructural stability in which the detrimental formation of Eta phase and topologically close-packed phase are minimized or eliminated in the superalloy microstructure at elevated temperatures. In one embodiment, the microstructure formed from the composition, according to the present disclosure, is devoid of Eta phase. "Weldable" or "good weldability" or grammatical variations therefore, as utilized herein, means a property of a composition, when welded, that exhibits few or no cracks or fissures as observed from a top view of the weld, and, if cracking is present, the cracking includes cracks having a length of less than 76 μm (0.003 inches).

In one embodiment, the method for forming the article includes providing the composition in any suitable form, such as ingots, melts, powders or other known metal forms, and forming the article from the composition. In a further embodiment, forming the article from the composition includes any suitable technique, including, but not limited to, material processing such as casting, powder metallurgical consolidation, additive manufacturing and thermal spraying. Suitable casting methods include ingot casting, investment casting or near net shape casting. Suitable additive manufacturing methods include, but are not limited to, the processes known to those of ordinary skill in the art as Direct Metal Laser Melting (DMLM), Direct Metal Laser Sintering (DMLS), Laser Engineered Net Shaping, Selective Laser Sintering (SLS), Selective Laser Melting (SLM), Electron Beam Melting (EBM), Fused Deposition Modeling (FDM), or a combination thereof. As mentioned above, any suitable casting, powder metallurgical, additive manufacturing or thermal spray method may be utilized to form the article. In embodiments wherein more complex parts are desirably produced, the molten metal may desirably be cast by an investment casting process or process via additive manufacturing which may generally be more suitable for the production of parts that cannot be produced by normal manufacturing techniques, such as turbine buckets that have complex shapes, or turbine components that have to withstand high temperatures. In one embodiment, the composition may be a weld filler composition or formed into a weld filler rod. In another embodiment, the molten metal may be cast, consolidated into turbine components by an ingot casting process. The forming may be done using gravity, pressure, inert gas or vacuum conditions. In some embodiments, forming is done in a vacuum.

In one embodiment, the melt in the mold is directionally solidified. Directional solidification generally results in single-crystal or columnar structure, i.e., elongated grains in the direction of growth, and thus, higher creep strength for the airfoil than an equiaxed cast, and is suitable for use in some embodiments. In a directional solidification, dendritic crystals are oriented along a directional heat flow and form either a columnar crystalline microstructure (i.e. grains which run over the entire length of the work piece and are referred to here, in accordance with the language customarily used, as directionally solidified (DS)). In this process, a transmission to globular (polycrystalline) solidification needs to be avoided, since non-directional growth inevitably forms transverse and longitudinal grain boundaries, which negate the favorable properties of the directionally solidified (DS). Such processing in combination with the composition according to the present disclosure results in a microstructure that reduces or eliminates the formation of microstructural instabilities such as Eta phase and TCP phases.

The cast articles comprising the nickel-based alloy are typically subjected to different heat treatments in order to optimize the strength as well as to increase creep resistance. In some embodiments, the castings are desirably solution heat treated at a temperature between the solidus and gamma prime solvus temperatures. Solidus is a temperature at which alloy starts melting during heating, or finishes solidification during cooling from liquid phase. Gamma prime solvus is a temperature at which gamma prime phase completely dissolves into gamma matrix phase during heating, or starts precipitating in gamma matrix phase during cooling. Such heat treatments generally reduce the presence of segregation. After solution heat treatments, alloys are heat treated below gamma prime solvus temperature to form gamma prime precipitates. The microstructure of the article that has been heat treated includes a microstructure comprising a face centered cubic structure with between 35 vol% and 45 vol% or between t 37 vol% and 40 vol% or 38 vol% gamma prime (γ'). The average size of the gamma prime precipitates is from 0.16 μm to t 0.26 μm or 0.18 μm to 0.24 μm or 0.22 μm.

Articles formed of the composition, according to the present disclosure, have fine eutectic areas compared with conventional superalloy compositions, such as GTD-111. The formed articles include longer low cycle fatigue (LCF) lifetimes due to less crack initiation sites resulting from the composition of the disclosure. In addition, the refined eutectic area also results in more gamma primes formed in the solidification process going into solution upon heat treatment. In addition, the article, according to the present disclosure, has a greater resistance to creep than known alloys. For example, the article, according to the present disclosure, has a low creep rate of 5% less, 10% less, 15% less, 20% less or greater than 20% less at times of 200 hours, 400 hours, 600 hours or 800 hours at gas turbine operational conditions than a conventional nickel-based superalloy article.

In one embodiment, the nickel-based alloys described are processed into a hot gas component of a gas turbine or an aviation engine, and wherein the hot gas path component is subjected to temperatures of at least 816 °C (1500 °F). In a further embodiment, the hot gas path component is selected from the group consisting of a bucket or blade, a vane, a nozzle, a seal, a combustor, and a stationary shroud, diaphragm or fuel nozzle. In one embodiment, the nickel-based alloys are processed into turbine buckets (also referred to as turbine blades) for large gas turbine machines. In one embodiment, the nickel-based alloys described are processed into weld filler rods, for example, welding processes, such as laser welding, gas tungsten arc welding (TIG), gas metal arc welding (MIG), or a combination thereof.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed but that the invention will include all embodiments falling within the scope of the appended claims.

Various aspects and embodiments of the present invention are defined by the following numbered clauses:

1. An article comprising a composition, wherein the composition comprises, by weight percent:

20.0% to 22.0% chromium (Cr);
18.0% to 20.0% cobalt (Co);
1.0% to 2.0% tungsten (W);
3.0% to 6.0% niobium (Nb);
0.5% to 1.5% titanium (Ti);
2.0% to 3.0% aluminum (Al);
0.5% to 1.5% molybdenum (Mo);
0.03% to 0.18% carbon (C);
up to 0.15% tantalum (Ta);
up to 0.20% hafnium (Hf);
up to 0.20% iron (Fe);

balance nickel (Ni) and incidental impurities, and wherein amount of Al is present according to the following formula:

$$Al \leq -(0.5 * Ti) + 3.75$$

and the composition is weldable, has a microstructure comprising between 35 vol% and 45 vol% gamma prime ($\gamma'$) and is substantially devoid of Eta and reduced content of TCP phases at elevated working temperatures.

2. The article of clause 1, wherein the microstructure is devoid of Eta phase.

3. The article of any preceding clause, wherein the microstructure has a reduced content of TCP phases at elevated working temperatures.

4. The article of any preceding clause, wherein the microstructure is devoid of Eta phase and TCP phases.

5. The article of any preceding clause, wherein the composition is directionally solidified.

6. The article of any preceding clause, wherein the composition comprises, by weight percent 21.0% chromium (Cr), 19.0% cobalt (Co), 1.5 % tungsten (W), 4.7% niobium (Nb), 1.0% titanium (Ti), 2.6% aluminum (Al), 1.0% molybdenum (Mo), 0.14% carbon (C), and balance nickel (Ni) and incidental impurities.

7. The article of any preceding clause, wherein the article is a hot gas path component of a gas turbine or an aviation engine, and wherein the hot gas path component is capable of exposure to hot gas path gases at temperatures of at least 816 °C (1500 °F).

8. The article of any preceding clause, wherein the article is selected from the group consisting of a vane, a nozzle, a seal, stationary shroud, diaphragm and fuel nozzle.

9. The article of any preceding clause, wherein the article is weld filler rod.

10. A method for forming an article, comprising:

forming a composition into the article, the composition comprising, by weight percent:

20.0% to 22.0% chromium (Cr);

18.0% to 20.0% cobalt (Co);

1.0% to 2.0% tungsten (W);

3.0% to 6.0% niobium (Nb);

0.5% to 1.5% titanium (Ti);

2.0% to 3.0% aluminum (Al);

0.5% to 1.5% molybdenum (Mo);

0.03% to 0.18% carbon (C);

up to 0.15% tantalum (Ta);

up to 0.20% hafnium (Hf);

up to 0.20% iron (Fe);

balance nickel (Ni) and incidental impurities, and

wherein amount of Al is present according to the following formula:

$$Al \leq -(0.5 * Ti) + 3.75$$

heat treating the article to form a heat-treated microstructure;

wherein the heat-treated microstructure is weldable, has between 35 vol% and 45 vol% gamma prime (γ') and is substantially devoid of Eta and reduced content of TCP phases at elevated working temperatures.

11. The method of any preceding clause, wherein the heat-treated microstructure is devoid of Eta phase.

12. The method of any preceding clause, wherein forming the composition into the article includes casting the composition comprises one of ingot casting, investment casting and near net shape casting.

13. The method of any preceding clause, wherein the casting includes directionally solidifying the composition.

14. The method of any preceding clause, wherein forming the composition into the article includes material processing selected from the group consisting of powder metallurgical consolidation, additive manufacturing and thermal spraying.

15. The method of any preceding clause, wherein forming the material processing is additive manufacturing and is selected from Direct Metal Laser Melting (DMLM), Direct Metal Laser Sintering (DMLS), Laser Engineered Net Shaping, Selective Laser Sintering (SLS), Selective Laser Melting (SLM), Electron Beam Melting (EBM), Fused Deposition Modeling (FDM), and a combination thereof.

16. A method of operating a gas turbine, comprising:

provide an article comprising a composition, wherein the composition comprises, by weight percent:

20.0% to 22.0% chromium (Cr);

18.0% to 20.0% cobalt (Co);

1.0% to 2.0% tungsten (W);

3.0% to 6.0% niobium (Nb);

0.5% to 1.5% titanium (Ti);

2.0% to 3.0% aluminum (Al);

0.5% to 1.5% molybdenum (Mo);

0.03% to 0.18% carbon (C);

up to 0.15% tantalum (Ta);

up to 0.20% hafnium (Hf);

up to 0.20% iron (Fe);

balance nickel (Ni) and incidental impurities, and

wherein amount of Al is present according to the following formula:

$$Al \leq - (0.5 * Ti) + 3.75$$

and the composition is weldable, has a microstructure comprising between 35 vol% and 45 vol% gamma prime (γ') and is substantially devoid of Eta and reduced content of TCP phases at elevated working temperatures;

exposing the article to a hot gas path stream at a temperature of at least 816 °C (1500 °F);

wherein the article has a low creep rate at greater than 2000 hours during the exposing.

17. The method of any preceding clause, wherein the article has a low creep rate at greater than 400 hours.

18. The method of any preceding clause, wherein the article has a low creep rate at greater than 600 hours.

19. The method of any preceding clause, wherein the article is selected from the group consisting of a vane, a nozzle, a seal, stationary shroud, diaphragm and fuel nozzle.

20. The method of any preceding clause, wherein the microstructure is devoid of Eta phase and reduced content of TCP phases at elevated working temperatures.

## Claims

1. An article comprising a composition, wherein the composition comprises, by weight percent:

20.0% to 22.0% chromium (Cr);
18.0% to 20.0% cobalt (Co);
1.0% to 2.0% tungsten (W);
3.0% to 6.0% niobium (Nb);
0.5% to 1.5% titanium (Ti);
2.0% to 3.0% aluminum (Al);
0.5% to 1.5% molybdenum (Mo);
0.03% to 0.18% carbon (C);
up to 0.15% tantalum (Ta);
up to 0.20% hafnium (Hf);
up to 0.20% iron (Fe);

balance nickel (Ni) and incidental impurities, and wherein amount of Al is present according to the following formula:

$$Al \leq -(0.5 * Ti) + 3.75$$

and the composition is weldable, has a microstructure comprising between 35 vol% and 45 vol% gamma prime ($\gamma'$) and is substantially devoid of Eta and reduced content of TCP phases at elevated working temperatures.

2.  The article of claim 1, wherein the microstructure is devoid of Eta phase.

3.  The article of claim 1 or 2, wherein the microstructure has a reduced content of TCP phases at elevated working temperatures.

4.  The article of claim 1, 2 or 3, wherein the microstructure is devoid of Eta phase and TCP phases.

5.  The article of any of claims 1 to 4, wherein the composition is directionally solidified.

6.  The article of any preceding claim, wherein the composition comprises, by weight percent 21.0% chromium (Cr), 19.0% cobalt (Co), 1.5 % tungsten (W), 4.7% niobium (Nb), 1.0% titanium (Ti), 2.6% aluminum (Al), 1.0% molybdenum (Mo), 0.14% carbon (C), and balance nickel (Ni) and incidental impurities.

7.  The article of any preceding claim, wherein the article is a hot gas path component of a gas turbine or an aviation engine, and wherein the hot gas path component is capable of exposure to hot gas path gases at temperatures of at least 816 °C (1500 °F).

8.  The article of claim 7, wherein the article is selected from the group consisting of a vane, a nozzle, a seal, stationary shroud, diaphragm and fuel nozzle.

9.  The article of any preceding claim, wherein the article is a weld filler rod.

10. A method for forming an article, comprising:

forming a composition into the article, the composition comprising, by weight percent:

20.0% to 22.0% chromium (Cr);
18.0% to 20.0% cobalt (Co);
1.0% to 2.0% tungsten (W);
3.0% to 6.0% niobium (Nb);
0.5% to 1.5% titanium (Ti);
2.0% to 3.0% aluminum (Al);

0.5% to 1.5% molybdenum (Mo);
0.03% to 0.18% carbon (C);
up to 0.15% tantalum (Ta);
up to 0.20% hafnium (Hf);
up to 0.20% iron (Fe);

balance nickel (Ni) and incidental impurities, and wherein amount of Al is present according to the following formula:

$$Al \leq -(0.5 * Ti) + 3.75$$

heat treating the article to form a heat-treated microstructure;
wherein the heat-treated microstructure is weldable, has between 35 vol% and 45 vol% gamma prime ($\gamma'$) and is substantially devoid of Eta and reduced content of TCP phases at elevated working temperatures.

11. The method of claim 10, wherein the heat-treated microstructure is devoid of Eta phase.

12. The method of claim 10 or 11, wherein forming the composition into the article includes casting the composition comprises one of ingot casting, investment casting and near net shape casting.

13. The method of claim 12, wherein the casting includes directionally solidifying the composition.

14. The method of any of claims 10 to 13, wherein forming the composition into the article includes material processing selected from the group consisting of powder metallurgical consolidation, additive manufacturing and thermal spraying.

15. The method of any of claims 10 to 14, wherein forming the material processing is additive manufacturing and is selected from Direct Metal Laser Melting (DMLM), Direct Metal Laser Sintering (DMLS), Laser Engineered Net Shaping, Selective Laser Sintering (SLS), Selective Laser Melting (SLM), Electron Beam Melting (EBM), Fused Deposition Modeling (FDM), and a combination thereof.

**Patentansprüche**

1.  Ein Artikel, umfassend eine Zusammensetzung, wobei die Zusammensetzung, auf der Basis von Gewichtsprozent, umfasst:

20,0 % bis 22,0 % Chrom (Cr);
18,0 % bis 20,0 % Kobalt (Co);
1,0 % bis 2,0 % Wolfram (W);

3,0 % bis 6,0 % Niob (Nb);
0,5 % bis 1,5 % Titan (Ti);
2,0 % bis 3,0 % Aluminium (Al);
0,5 % bis 1,5 % Molybdän (Mo);
0,03 % bis 0,18 % Kohlenstoff (C);
bis zu 0,15 % Tantal (Ta);
bis zu 0,20 % Hafnium (Hf);
bis zu 0,20 % Eisen (Fe);

wobei der Rest aus Nickel (Ni) und zufälligen Verunreinigungen besteht und
wobei die Menge an Al der folgenden Formel entsprechend vorliegt:

$$Al \leq -(0,5 * Ti) + 3,75$$

und die Zusammensetzung schweißbar ist, eine Mikrostruktur aufweist, die 35 Vol.-% bis 45 Vol.-% Gamma-Prime ($\gamma'$) umfasst und bei erhöhten Arbeitstemperaturen im Wesentlichen von Eta frei ist und einen reduzierten Gehalt an TCP-Phasen.

2. Der Artikel nach Anspruch 1, wobei die Mikrostruktur von Eta-Phase frei ist.

3. Der Artikel nach Anspruch 1 oder 2, wobei die Mikrostruktur bei erhöhten Arbeitstemperaturen einen reduzierten Gehalt an TCP-Phasen aufweist.

4. Der Artikel nach Anspruch 1, 2 oder 3, wobei die Mikrostruktur von Eta-Phase und TCP-Phasen frei ist.

5. Der Artikel nach einem der Ansprüche 1 bis 4, wobei die Zusammensetzung direktional verfestigt ist.

6. Der Artikel nach irgendeinem vorhergehenden Anspruch, wobei die Zusammensetzung, auf der Basis von Gewichtsprozent, umfasst: 21,0 % Chrom (Cr), 19,0 % Kobalt (Co), 1,5 % Wolfram (W), 4,7 % Niob (Nb), 1,0 % Titan (Ti), 2,6 % Aluminium (Al), 1,0 % Molybdän (Mo), 0,14 % Kohlenstoff (C), wobei der Rest aus Nickel (Ni) und zufälligen Verunreinigungen besteht.

7. Der Artikel nach irgendeinem vorhergehenden Anspruch, wobei der Artikel eine Heißgaswegkomponente einer Gasturbine oder eines Flugzeugmotors ist und wobei die Heißgaswegkomponente in der Lage ist, Heißgasweggasen bei Temperaturen von mindestens 816 °C (1500 °F) unterworfen zu werden.

8. Der Artikel nach Anspruch 7, wobei der Artikel aus der Gruppe ausgewählt ist bestehend aus einem Flügel, einer Düse, einer Dichtung, einer stationären Hülle, einer Membran und einer Brennstoffdüse.

9. Der Artikel nach irgendeinem vorhergehenden Anspruch, wobei der Artikel ein Schweißfüllmetallstab ist.

10. Ein Verfahren zur Formung eines Artikels, umfassend:

das Formen einer Zusammensetzung zu einem Artikel, wobei die Zusammensetzung, auf der Basis von Gewichtsprozent, umfasst:

20,0 % bis 22,0 % Chrom (Cr);
18,0 % bis 20,0 % Kobalt (Co);
1,0 % bis 2,0 % Wolfram (W);
3,0 % bis 6,0 % Niob (Nb);
0,5 % bis 1,5 % Titan (Ti);
2,0 % bis 3,0 % Aluminium (Al);
0,5 % bis 1,5 % Molybdän (Mo);
0,03 % bis 0,18 % Kohlenstoff (C);
bis zu 0,15 % Tantal (Ta);
bis zu 0,20 % Hafnium (Hf);
bis zu 0,20 % Eisen (Fe);

wobei der Rest aus Nickel (Ni) und zufälligen Verunreinigungen besteht und
wobei die Menge an Al der folgenden Formel entsprechend vorliegt:

$$Al \leq -(0,5 * Ti) + 3,75$$

das Hitzebehandeln des Artikels, um eine hitzebehandelte Mikrostruktur zu bilden,
wobei die hitzebehandelte Mikrostruktur schweißbar ist, 35 Vol.-% bis 45 Vol.-% Gamma-Prime ($\gamma'$) umfasst und bei erhöhten Arbeitstemperaturen im Wesentlichen von Eta frei ist und einen reduzierten Gehalt an TCP-Phasen.

11. Das Verfahren nach Anspruch 10, wobei die hitzebehandelte Mikrostruktur von Eta-Phase frei ist.

12. Das Verfahren nach Anspruch 10 oder 11, wobei das Formen der Zusammensetzung zu einem Artikel das Gießen der Zusammensetzung, das eines von Barrenguss, Feinguss und Endkonturnaheguss umfasst, einschließt.

13. Das Verfahren nach Anspruch 12, wobei das Gießen das direktionale Verfestigen der Zusammensetzung einschließt.

14. Das Verfahren nach irgendeinem der Ansprüche 10 bis 13, wobei das Formen der Zusammensetzung zu dem Artikel das Materialverarbeiten einschließt, ausgewählt aus der Gruppe bestehend aus pulvermetallurgischer Verfestigung, additiver Fertigung und thermischem Spritzen.

**15.** Das Verfahren nach irgendeinem der Ansprüche 10 bis 14, wobei das Formen der Materialverarbeitung die additive Fertigung ist und unter direktem Metalllaserschmelzen (DMLM), direktem Metalllasersintern (DMLS), Laser Engineered Net Shaping, selektivem Lasersintern (SLS), selektivem Laserschmelzen (SLM), Elektronenstrahlschmelzen (EBM), Filament-3-D-Druck (FDM) und einer Kombination davon ausgewählt wird.

**Revendications**

**1.** Article comprenant une composition, la composition comprenant, en pourcentage en poids :

20,0 % à 22,0 % de chrome (Cr) ;
18,0 % à 20,0 % de cobalt (Co) ;
1,0 % à 2,0 % de tungstène (W) ;
3,0 % à 6,0 % de niobium (Nb) ;
0,5 % à 1,5 % de titane (Ti) ;
2,0 % à 3,0 % d'aluminium (Al) ;
0,5 % à 1,5 % de molybdène (Mo) ;
0,03 % à 0,18 % de carbone (C) ;

jusqu'à 0,15 % de tantale (Ta) ;
jusqu'à 0,20 % d'hafnium (Hf) ;
jusqu'à 0,20 % de fer (Fe) ;
le reste de nickel (Ni) et d'impuretés fortuites et la quantité d'Al étant présente selon la formule suivante :

$$Al \leq -(0,5*Ti) + 3,75$$

et la composition étant soudable, ayant une microstructure comprenant entre 35 % en volume et 45 % en volume de phase gamma prime ($\gamma'$) et étant pratiquement dépourvue de phase êta et une teneur réduite en phases topologiquement compactes (TCP) à des températures de travail élevées.

**2.** Article selon la revendication 1, la microstructure étant dépourvue de phase êta.

**3.** Article selon la revendication 1 ou 2, la microstructure ayant une teneur réduite en phases TCP à des températures de travail élevées.

**4.** Article selon la revendication 1, 2 ou 3, la microstructure étant dépourvue de phase êta et de phases TCP.

**5.** Article selon l'une quelconque des revendications 1 à 4, la composition étant solidifiée de façon directionnelle.

**6.** Article selon une quelconque revendication précédente, la composition comprenant, en pourcentage en poids, 21,0 % de chrome (Cr), 19,0 % de cobalt (Co), 1,5 % de tungstène (W), 4,7 % de niobium (Nb), 1,0 % de titane (Ti), 2,6 % d'aluminium (Al), 1,0 % de molybdène (Mo), 0,14 % de carbone (C) et le reste de nickel (Ni) et d'impuretés fortuites.

**7.** Article selon une quelconque revendication précédente, l'article étant un élément de voie de passage de gaz chaud d'une turbine à gaz ou d'un moteur d'aviation et l'élément de voie de passage de gaz chaud étant apte à être exposé à des gaz de voie de passage de gaz chaud à des températures d'au moins 816 °C (1500 °F).

**8.** Article selon la revendication 7, l'article étant choisi dans le groupe constitué par une aube, une buse, un joint d'étanchéité, une enveloppe fixe, un diaphragme et un injecteur de carburant.

**9.** Article selon une quelconque revendication précédente, l'article étant une baguette d'apport de soudage.

**10.** Procédé pour la formation d'un article, comprenant :

la transformation d'une composition en l'article, la composition comprenant, en pourcentage en poids :

20,0 % à 22,0 % de chrome (Cr) ;
18,0 % à 20,0 % de cobalt (Co) ;
1,0 % à 2,0 % de tungstène (W) ;
3,0 % à 6,0 % de niobium (Nb) ;
0,5 % à 1,5 % de titane (Ti) ;
2,0 % à 3,0 % d'aluminium (Al) ;
0,5 % à 1,5 % de molybdène (Mo) ;
0,03 % à 0,18 % de carbone (C) ;

jusqu'à 0,15 % de tantale (Ta) ;
jusqu'à 0,20 % d'hafnium (Hf) ;
jusqu'à 0,20 % de fer (Fe) ;
le reste de nickel (Ni) et d'impuretés fortuites et la quantité d'Al étant présente selon la formule suivante :

$$Al \leq -(0,5*Ti) + 3,75$$

le traitement thermique de l'article pour former une microstructure traitée thermiquement ;
la microstructure traitée thermiquement étant soudable, ayant entre 35 % en volume et 45 % en volume de phase gamma prime (γ') et étant pratiquement dépourvue de phase êta et une teneur réduite en phases TCP à des températures de travail élevées.

11. Procédé selon la revendication 10, la microstructure traitée thermiquement étant dépourvue de phase êta.

12. Procédé selon la revendication 10 ou 11, la transformation de la composition en l'article comprenant la coulée de la composition comprenant l'une d'une coulée en lingotière, d'une fonte à la cire perdue et d'une coulée à la forme quasi-définitive.

13. Procédé selon la revendication 12, la coulée comprenant la solidification directionnelle de la composition.

14. Procédé selon l'une quelconque des revendications 10 à 13, la transformation de la composition en l'article comprenant un traitement de matériau choisi dans le groupe constitué par une consolidation métallurgique de poudre, une fabrication additive et une projection thermique.

15. Procédé selon l'une quelconque des revendications 10 à 14, la formation du traitement de matériau étant une fabrication additive et étant choisi entre le procédé DMLM (direct metal laser melting), le procédé DMLS (direct metal laser sintering), le procédé LENS (laser engineered net shaping), le frittage sélectif au laser (SLS), la fusion sélective au laser (SLM), la fusion par faisceau d'électrons (EBM), le dépôt de fil fondu (FDM) et une combinaison de ceux-ci.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6416596 B, John H. Wood

- US 3615376 A, Earl W. Ross